Europäisches Patentamt

European Patent Office

Office européen des brevets

(19)

(11) Veröffentlichungsnummer : **0 137 219**
**B1**

(12) **EUROPÄISCHE PATENTSCHRIFT**

(45) Veröffentlichungstag der Patentschrift :
04.03.87

(21) Anmeldenummer : 84109617.5

(22) Anmeldetag : 13.08.84

(51) Int. Cl.⁴ : **A 61 C 9/00**

(54) Vorrichtung zum Abdrucknehmen für Zahnersatz.

(30) Priorität : 12.08.83 DE 3329284

(43) Veröffentlichungstag der Anmeldung :
17.04.85 Patentblatt 85/16

(45) Bekanntmachung des Hinweises auf die Patenterteilung : 04.03.87 Patentblatt 87/10

(84) Benannte Vertragsstaaten :
AT BE CH DE FR GB IT LI NL SE

(56) Entgegenhaltungen :
DE-B- 1 566 219
DE-C- 3 104 721
US-A- 3 488 848

(73) Patentinhaber : Sturtzkopf, Robert
Wilhelm-Hey-Strasse 14
D-8000 Munchen 60 (DE)

Langer, Hans-Georg
Ulmenstrasse 2
D-8021 Taufkirchen (DE)

(72) Erfinder : Sturtzkopf, Robert
Wilhelm-Hey-Strasse 14
D-8000 München 60 (DE)

(74) Vertreter : Dipl.-Ing. H. Hauck Dipl.-Phys. W. Schmitz
Dipl.-Ing. E. Graalfs Dipl.-Ing. W. Wehnert Dr.-Ing. W.
Döring
Mozartstrasse 23
D-8000 München 2 (DE)

## Beschreibung

Die Erfindung betrifft eine Vorrichtung zur gegenseitigen Ausrichtung von Kauflächen des Oberkiefers und Unterkiefers für die Herstellung von Zahnersatz.

Hierzu dient ein entsprechend den Zahnbögen ausgeformtes Kunststoffsäckchen, das vorzugsweise mit sahniger angerührtem Abdruckgips gefüllt und verschlossen zwischen die Zahnreihen bzw. die aus Wachs angefertigten provisorischen Prothesenteile eingebracht wird. Der Patient beißt mit mäßiger Kraft auf dieses Flüssigkeitspolster, das gerade soweit mit Gips gefüllt ist, daß die Zahnreihen keinen Kontakt miteinander bekommen können. Sie schwimmen übereinander und kommen nicht in Berührung. Der Patient hat, solange der Gips flüssig ist, die Möglichkeit, durch probierende seitliche Unterkieferbewegungen die für sein gleichzeitiges Zubeißen als am bequemsten, d. h. der Kraftentfaltung als am wenigsten widerstrebend empfundene Unterkieferposition ausfindig zu machen. In der durch solche Bewegungen ausfindig gemachten Lage der Zähne bzw. Prothesenteile verharrt der Patient, bis der Gips abbindet. Damit entspricht die Form des ausgehärteten Beutels genau der physiologisch korrekten räumlichen Zuordnung der Kauflächen von Ober- und Unterkiefer.

Mit diesem Verfahren sind erhebliche Nachteile bekannter Registriermethoden vermieden. Insbesondere trifft dies auf Verfahren zu, die zur Registrierung der Lage zwischen Ober- und Unterkiefer einen oder mehrere an den provisorischen Prothesen angeordnete Stützstifte benötigen. Ein solches Verfahren ist aufwendig. Außerdem kann eine störungsfreie Positionskorrektur des Unterkiefers nach Kontakt mit dem Oberkiefer nicht erfolgen, da ein freies Wechselspiel zwischen den Kiefern zur richtigen räumlichen Zuordnung nich möglich ist. Verwendet man dagegen einen Wachsbiß, also eine zwischen die Zähne gelegte angewärmte Wachsplatte, auf welche der Patient beißt, so ist auch hier die Positionskorrektur des Unterkiefers gegenüber dem Oberkiefer nicht möglich, da die Wachsplatte ein freies Gleiten behindert. Dies trifft auch dann zu, wenn der Patient beim Zubeißen versucht, die korrekte Ausrichtung der Kauflächen zu erzielen, da er keine Korrekturmöglichkeit hat.

Aus DE-C-3 104 721 ist eine Vorrichtung zur gegenseitigen Ausrichtung von Kauflächen des Oberkiefers und Unterkiefers für die Herstellung von Zahnersatz bekannt, die alle im Oberbegriff des Patentanspruchs 1 angegebenen Merkmale aufweist.

Aufgabe der vorliegenden Erfindung ist es, die Vorrichtung nach der obergenannten Patentschrift dahingehend zu verbessern, daß die Abdruckgenauigkeit erhöht, die Genauigkeit der korrekten räumlichen Zuordnung von Ober- und Unterkieferprothese verbessert und schließlich das Arbeiten mit dem Kunststoffsäckchen erleichtert wird.

Diese Aufgabe ist erfindungsgemäß durch die im Kennzeichnenden Teil des Patentanspruches 1 angegebenen Merkmale gelöst.

So ist es vorteilhaft, daß der Kunststoffbeutel im Bereich der Frontzähne, insbesondere der Schneidezähne ausgespart ist, so daß von diesen kein Abdruck genommen wird. So ist vermieden, daß ein zwischen den Frontzähnen liegendes Flüssigkeitspolster störend wirkt, und ein Hindernis darstellt, das die räumliche Zuordnung von Ober- und Unterkiefer erschwert. Ferner wird durch das an der Einfüllöffnung des Beutels vorgesehene Ventil das Füllen des Beutels erleichtert und wird verhindert, daß dann anschließend, insbesondere beim Zubeißen Füllmaterial aus dem Beutel austreten kann. Ferner wird durch die Perforierungen in den Schenkeln des Beutels sichergestellt, daß die Füllung vollständig erfolgt, da die Luft durch die Perforierung austreten kann, so daß sich keine Luftblasen im Beutel bilden können.

Ein Ausführungsbeispiel der Erfindung ist nachstehend anhand der Zeichnung näher erläutert. Es zeigt:

Figur 1    eine Draufsicht auf einen Beutel mit Halter,

Figur 2    einen Schnitt längs der Linie 2-2 in Fig. 1, und

Figur 3    einen Schnitt längs der Linie 3-3 in Fig. 1 in vergrößertem Maßstab.

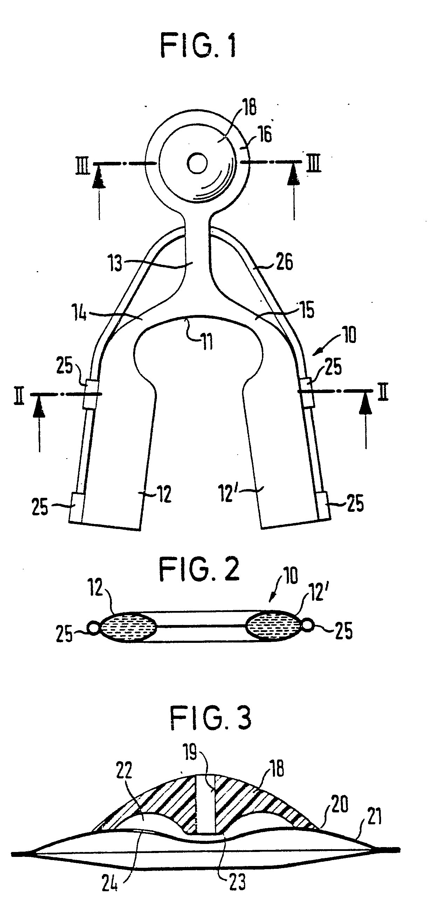

Der Beutel 10 besteht aus zwei dünnen, längs ihrer Ränder durch Verschweißen verbundenen Kunststoff-Folien. Im Bereich der Frontzähne ist der Beutel 10 längs der Linie 11 ausgenommen. Die beiden Schenkel 12 und 12' dienen zum Abdruck der Backenzähne. Eine schlauchartige, vordere Verlängerung 13, durch die eine aushärtbare Masse, wie Abdruckgips in den Beutel 10 eingefüllt wird, ist über je eine schlauchartige Verlängerung 14 und 15 mit den Schenkeln 12 und 12' verbunden. Das Ende der Verlängerung 13 ist bei 16 verbreitert, so daß eine Auflage für eine Ventilkappe 18 besteht, die im Querschnitt in Fig. 3 dargestellt ist.

Die Ventilkappe 18 weist eine mittlere Einfüllkanal 19 auf, in die eine mit angerührtem Gips gefüllte Spritze einsteckbar ist. Der Rand 20 der Kappe 18 ist mit der zugekehrten Wandung 21 des Beutels dicht, beispielsweise durch Schweißen verbunden. Die Kappe 18 weist gegenüber der Wandung 21 einen kreisrunden Hohlraum 22 auf, der durch einen Steg 23 von dem Einfüllkanal 19 getrennt ist. Eine Einfüllöffnung 24 in den Beutel mündet in den Hohlraum 22.

Wird der Gips durch den Einfüllkanal 19 eingeschoben, so entfernt sich die Wandung 21 vom Steg 23 und der Gips kann in den Hohlraum 22 und von dort durch die Einfüllöffnung 24 in den Beutel gelangen. Wird jedoch auf den Beutel durch Zubeißen Druck ausgeübt, so legt sich die Wandung 21 an den Steg 23 an und die Füllmasse kann aus dem Hohlraum 22 nicht in den Einfüllkanal 19 zurückfließen. Auf diese Weise dient die Kappe 18 in Verbindung mit der Wandung 21 und der gegenüber dem Einfüllkanal 19 seitlich versetzten Einfüllöffnung 24 als Rückschlagventil.

Um ein blasenfreies Befüllen des Beutels 10 zu gewährleisten, sind die Schenkel 12 und 12' des Beutels mit sehr feinen Perforierungen versehen. Beim Einfüllen des angerührten Druckgipses kann durch diese Perforationen Luft austreten, nicht aber der Gips, so daß der Beutel blasenfrei gefüllt werden kann.

Nach dem Füllen des Beutels erfolgt der Zubiß des Patienten. Dabei bekommen die Zahnreihen der provisorischen Prothesen im Munde des Patienten keinen Kontakt miteinander, sondern schwimmen übereinander, wobei der Patient durch Probieren der seitlichen Kieferbewegungen in der Lage ist, die korrekte räumliche Zuordnung von Ober- und Unterkiefer aufzufinden. In dieser Lage muß der Patient nun verharren, bis der Gips innerhalb von 30 bis 60 Sekunden abbindet. Ist der Gips erstarrt, so sind Ober- und Unterkieferprothese auf einfache und eindeutige Art miteinander verschlüsselt, worauf der Beutel entfernt wird.

An den beiden äußeren Längskanten des Beutels sind Laschen 25 vorgesehen, in welche ein drahtförmiger Halter 26 eingesteckt werden kann.

## Patentansprüche

1. Vorrichtung zur gegenseitigen Ausrichtung von Kauflächen des Oberkiefers und Unterkiefers für die Herstellung von Zahnersatz, wobei zwischen Oberkiefer und Unterkiefer ein frei verformbares Polster eingelegt wird, das nach Erlangen eines satten Aufeinanderschließens der Kauflächen zum Erhärten gebracht wird, und wobei das Polster aus einem gabelförmig ausgebildeten Kunststoffbeutel (10) mit einer mittig zu den beiden Schenkeln (12, 12') angeordneten schlauchartigen Verlängerung (13) mit einer Einfüllöffnung besteht, dadurch gekennzeichnet, daß der Beutel (10) eine dem Bereich der Frontzähne entsprechende Ausnehmung (11) aufweist und die Schenkel (12, 12') über schlauchartige Verbindungen (14, 15) außerhalb des Bereiches der Frontzähne miteinander und mit der Einfüllöffnung (24) verbunden sind.

2. Vorrichtung nach Anspruch 1, dadurch gekennzeichnet, daß die Einfüllöffnung (24) ein Ventil aufweist, das als Rückschlagventil ausgebildet ist.

3. Vorrichtung nach Anspruch 2, dadurch gekennzeichnet, daß das Ventil aus einer Kappe (18) besteht, deren Rand (20) mit einem vergrößerten Abschnitt (16) der mit der Einfüllöffnung (24) versehenen Verlängerung (13) verbunden ist, die einen Einfüllkanal (19) und einen seitlich zum Einfüllkanal versetzten Hohlraum (22) aufweist, in den die Einfüllöffnung (24) des Beutels mündet, und die zwischen dem Einfüllkanal (19) und dem Hohlraum (22) einen Steg (23) aufweist, der mit der zugekehrten Wandung (21) des Beutels zusammenwirkt.

4. Vorrichtung nach einem der Ansprüche 1 bis 3, dadurch gekennzeichnet, daß die Wandung des Beutels (10) im Bereich der Schenkel (12, 12') perforiert ist.

## Claims

1. A device for mutually aligning the chewing surfaces of the upper and lower jaw for the purpose of producing a prosthesis, wherein a freely shapeable wadding is interposed between the upper and lower jaw which is allowed to harden once the chewing surfaces have been firmly closed on each other and wherein the wadding comprises a fork-like shaped plastic bag (10) including a tubular-like extension (13) centered to both the shanks (12, 12') and having a filling opening, characterized in that the bag (10) is provided with a recess (11) corresponding to the area of the frontal teeth and that the shanks (12, 12') are connected through tubular-like connections (14, 15) outside the area of the frontal teeth to each other and to the filling opening (24).

2. The device of claim 1, characterized in that the filling opening (24) is provided with a valve which is defined to be a check valve.

3. The device of claim 2, characterized in that the valve comprises a cap (18), the edge (20) of which being secured to an enlarged portion (16) of the elongation (13) including the filling opening (24), the cap including a filling passage (19) and a hollow space (22) laterally displaced with respect to the filling passage, the filling opening (24) of the bag opening into the hollow space and the cap including a ledge (23) between the filling passage (19) and the hollow space (22) which ledge cooperates with the adjacent wall (21) of the bag.

4. The device according to one of the claims 1 to 3, characterized in that the wall of bag (10) is perforated in the area of the shanks (12, 12').

## Revendications

1. Dispositif pour la prise d'empreintes dentaires des surfaces de mastication de la mâchoire supérieure et de la mâchoire inférieure, en vue de la réalisation de prothèses dentaires, du type comportant un coussinet librement déformable destiné à être incorporé entre les mâchoires supérieures et inférieures, ledit coussinet durcissant pendant que l'on exerce sur lui une pression avec les deux mâchoires, ledit coussinet présentant la forme d'une fourche en matière synthétique se prolongeant par un élément de raccordement (13) de forme tubulaire, disposé au milieu des deux bras (12, 12'), caractérisé en ce que ledit coussinet comporte au niveau des incisives un évidement (11), et que les bras (12, 12') sont reliés entre eux et avec l'orifice de remplissage, en dehors de la zone située au niveau des incisives.

2. Dispositif selon la revendication 1, caractérisé en ce que le canal de remplissage constitue une valve anti-retour.

3. Dispositif selon la revendication 2, caractérisé en ce que la valve anti-retour est constituée d'une valve (8) dont le bord est relié à la paroi élargie (16) de l'élément de raccordement (13) comportant un orifice de remplissage (24), et comportant un canal de remplissage (19) ainsi qu'un volume creux (22) excentré, communiquant avec le coussinet par un orifice de remplissage (24), ledit canal de remplissage (19) communiquant avec le volume creux (22) par un filet (23) pouvant coopérer avec la partie de la paroi (21) lui faisant face.

4. Dispositif selon l'une quelconque des revendications 1 à 3, caractérisé en ce que les parois du coussinet (10) sont perforées au niveau des bras (12, 12').

# FIG. 1

# FIG. 2

# FIG. 3